# EUROPEAN PATENT APPLICATION

(11) **EP 3 530 902 A1**
(43) Date of publication of application: **28.08.2019**
(21) Application number: 19158488.7
(22) Date of filing: 21.02.2019
(51) Int. Cl.: F02B 19/12, F02B 19/18, F02M 21/02, F02M 57/06

(54) **AN IGNITION CHAMBER FOR INDIRECT IGNITION IN A GAS SPARK-IGNITION INTERNAL COMBUSTION PISTON ENGINE**

(30) Priority: 23.02.2018 CZ 20180093
(71) Applicant: Ceske vysoke uceni technicke v Praze, Fakulta strojni, Centrum vozidel udrzitelne mobility, 160 00 Praha 6, Dejvice (CZ)
(72) Inventor: Vavra, Jiri, 252 64 Velke Prilepy (CZ); Takáts, Michal, 160 00 Praha 6, Bubenec (CZ); Macek, Jan, 149 00 Praha 4, Chodov (CZ); Syrovatka, Zbynek, 251 69 Velke Popovice (CZ)
(74) Representative: Musil, Dobroslav

(57) **Abstract**

An ignition chamber (5, 51, 52, 53, 54) for indirect ignition in a gas spark-ignition internal combustion piston engine projecting at least with its face into a main combustion space (3), in which a spark gap (10) of a spark plug (9) is arranged, whereby gaseous fuel supply duct (8, 81, 82) opens into an ignition chamber (5, 51, 52, 53, 54) in the vicinity of its face opposite the face which projects into the main combustion space (3) and the inner space (7) of the ignition chamber (5, 51, 52, 53, 54) and the main combustion space (3) of the engine cylinder are interconnected by at least two communicating orifices (11, 111, 12, 121, 122). The axis (X₂) of one part of the communicating orifices (11, 111) forms an angle (β₂) with the longitudinal axis (6) of the ignition chamber (5, 51, 52, 53, 54), the angle (β₂) being at least by 3° greater than the angle (β₁), which the axis (X₁) of the second part of the communicating orifices (12, 121, 122) forms with the longitudinal axis (6) of the ignition chamber (5, 51, 52, 53, 54), whereby the gaseous supply duct /8, 81, 82) opens into the inner space (7) of the ignition chamber (5, 51, 52, 53, 54).

## Description

### Technical field

An ignition chamber for indirect ignition in a gas spark-ignition internal combustion piston engine extending at least with its face into a main combustion space, in which a spark gap of a spark plug is arranged and the supply of gaseous fuel opens into an ignition chamber in the vicinity of the face of the ignition chamber opposite the face which projects into the main combustion space, the inner space of the ignition chamber being connected via at least two communicating orifices to the main combustion space of the cylinder of the engine.

### Background art

A spark-ignition engine with conventional spark-ignition system whose spark gap is arranged in a non-separated combustion chamber allows the engine to operate with a mixture composition that is close to the stoichiometric basis. However, significant dilution of the mixture results in a significant deterioration of the combustion chemical efficiency, excess of unburnt hydrocarbons in the flue gas and great variability in the working cycles which finally leads to a complete collapse of the combustion process. The limiting excess air coefficient for an extremely poor mixture is λ = 1,65.

An ignition chamber without fuel supply, for example according to US20070236122, allows to minimize cycle-to-cycle variability, but does not allow operation on an extremely diluted mixture and increases the risk of self-inflammation when operating on a mixture whose composition is close to the stoichiometric basis.

It is known that, on the contrary, an ignition chamber with fuel supply allows the engine to operate on an extremely diluted mixture having an excess air coefficient greater than λ = 2. The content of nitrogen oxides in raw flue gases, with the mixture thus diluted, allows the emission limits to be met without the need for additional flue gas treatment.

In an ignition chamber with a symmetrical arrangement of the communicating orifices between the ignition chamber and the main combustion space, when replenishing the filling of the ignition chamber by a diluted mixture from the main combustion chamber during the compression stroke, accidental swirling flows of the contents of the combustion chamber may occur. This, however, negatively affects the variability of the start-up of the combustion process with the effect of the cycle-to-cycle variability in the engine performance parameters.

The ignition chamber with a targeted rotary motion around the longitudinal axis of the chamber caused by the tangential orifices between the ignition chamber and the main combustion space enables to control the turbulence intensity and hence the radial stratification of the mixture. The axial stratification of the mixture cannot be affected by this solution. However, it is known that the magnitude of the energy of the multipoint ignition of the lean mixture in the main combustion space is directly related to the homogeneity of the mixture in the ignition chamber at the moment of the spark-over.

The solution according to EP3255744A1 relates to minimization of the dead volume between a valve controlling additional fuel supply into a pre-chamber, whereby the valve is at least adjacent to the pre-chamber.

The body of the pre-chamber consists of at least two parts connected to each other via a weld seam (in an illustrated embodiment it consists of three parts), the spark plug is special, the central electrode is crown-shaped. The solution does not deal with the formation of a homogeneous mixture, its flow in the pre-chamber, or the exit of the ignition mixture into the main combustion space. The aim is burning a lean mixture, and therefore, apparently, this problem is not sufficiently solved by the above-mentioned minimization of the dead volume between the valve controlling the additional fuel supply and the pre-chamber. Since the pre-chamber is screwed into the cylinder head, its turning is not defined after tightening, the arrangement of the connecting openings between the pre-chamber and the main combustion space must be axially symmetrical.

According to EP2977583A1 additional fuel is introduced into the pre-chamber via a special electromagnetic valve and via a further valve responsive to the vacuum in the pre-chamber which is generated due to the vacuum in the main combustion space at a bottom dead center of the piston. Obviously, this effect is not achieved by transverse swirling flows of the fuel mixture injected from the main combustion space. The device described here is specifically designed for an engine of a Miller-cycle type, i.e. the four-stroke engine with extended expansion supercharged by a compressor.

The device according to the preceding document is supplemented by the solution according to EP2372142A1, wherein the body surrounding the spark plug is provided with cooling orifices. They are supposed to prevent the formation of soot and high temperatures in the check valve area and thus prevent the check valve failures. In this document, too, no mention is made of the swirling flows of the mixture in the pre-chamber and its influence on the optimal combustion of the lean mixture in the main combustion space. The modification of the two previous solutions is EP2372135A1, which deals only with a sub-element, namely with the check valve of document EP2372142A1. The device according to EP2977583A1, EP2372142A1 and EP2372135A1 is apparently intended for large engines only.

US2016/0276810 relates to the technical field of spark-ignition internal combustion engines burning a lean mixture with an excess of air. Macroscopic flow and swirling near the flame core may cause the flame quenching, i.e. poor quality of burning. In some cases, from the point of view of stable ignition, the cooling of electrodes when using a lean mixture may be problematic.

The patent claims describe in detail a certain specific embodiment in which it is apparent from the point of view of the above aim of the solution that the spark gap area is shielded relative to the flow of the mixture displaced by the piston from the main combustion space. The construction is complicated, not utilizing the formation of a transverse swirling flow in the part of the pre-chamber which is directly connected to the main combustion space by communicating orifices. The pre-chamber is not flushed.

The solution according to US2012010302 A1 protects by independent claim 1 an ignition pre-chamber which contains a plurality of communicating orifices connecting the inner space of the pre-chamber to the main combustion space. This is a very general and non-specific description of most existing pre-chambers, and therefore constitutes the background art of these devices.

Document US4987868 protects by independent claim 1 a system of flow-through orifices between an ignition pre-chamber and a main combustion space, wherein the orifices serve for controlled gas exchange to and from a pre-chamber capsule, which surrounds the spark gap of the spark plug, whereby the flow-through orifices are sized, orientated and positioned to direct the gaseous fuel and air along a swirling pathway around the electrodes of the spark plug. According to claim 2 the flow-through orifices in the capsule of the pre-chamber tangential, according to claim 3 these tangential orifices are inclined upwards. From this, it is obvious that the goal is not to achieve transverse swirling flow in the pre-ignition chamber. US4987868 discloses a non-flushed pre-chamber with targeted stratification of the mixture. The purpose of using the tangential orifices is to achieve a richer mixture around the centrally located electrode, since due to the centrifugal force the air is directed to the periphery and the lighter gaseous fuel (methane) to the center.

The goal of the invention is to provide a constructional arrangement of an ignition chamber for indirect ignition in a gas spark-ignition internal combustion piston engine in which in the ignition chamber, controlled swirling is generated which results in the formation of a homogeneous, easily ignitable mixture. The purpose of the proposed device is to ignite even a very lean mixture in the main combustion space, which requires an ignition source of a substantially higher potential energy than the spark of the spark plug.

### Principle of the invention

The goal of the invention is achieved by an ignition chamber for indirect ignition in a gas spark-ignition internal combustion piston engine, projecting at least with its front face into a main combustion space, its inner space being connected by at least two communicating orifices to the main combustion space of the engine cylinder. The principle of the invention consists in that the axis of one part of the communicating orifices forms an angle with the longitudinal axis of the ignition chamber which is at least by 3° greater than the angle that the axis of the second part of the communicating orifices forms with the longitudinal axis of the ignition chamber. In this arrangement, the lean fuel mixture flowing in the ignition chamber generate a transverse swirling flow which can produce a substantially homogeneous easily ignitable mixture whose exothermic oxidation initiated by an ignition of a spark of a spark plug produces ignition energy substantially greater than the energy of the spark itself. This allows engine operation on an extremely lean mixture while complying with emission standards and other environmental norms and standards.

In a preferred embodiment, the supply of gaseous fuel opens into the ignition chamber in the area of the spark gap of the spark plug. This makes it possible to flush efficiently the residual gases in the area of the electrodes of the spark plug around the spark gap of the spark plug.

### Description of drawings

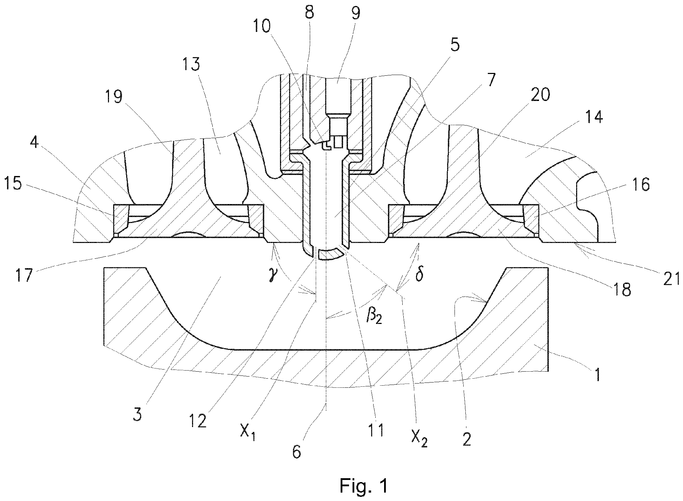

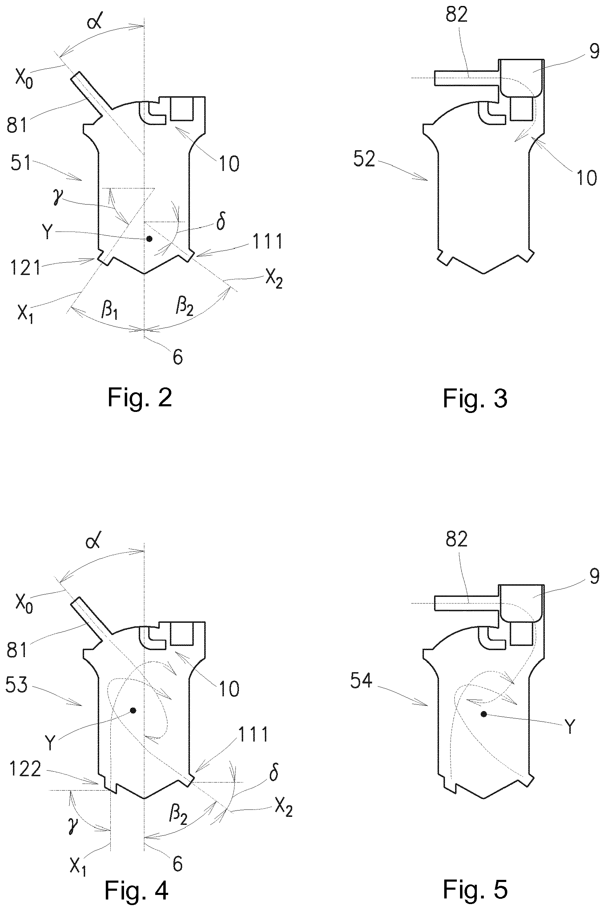

The ignition chamber according to the invention is shown in the drawings, wherein Fig. 1 shows an axial section of the upper part of a cylinder and piston and of the facing portion of an engine head through a plane in which are situated the longitudinal axis of a spark plug and the longitudinal axis of a suction and exhaust valves, Fig. 2 shows a schematic diagram of a first embodiment of an ignition chamber with an inclined gaseous fuel supply duct, Fig. 3 shows a schematic diagram of a second embodiment of the ignition chamber with a horizontal gaseous fuel supply duct, which opens into the ignition chamber in the area of the spark gap of the spark plug, Figs. 4 and 5 represent schematic diagrams of the ignition chamber corresponding to Figures 2 and 3, showing the flow lines of the lean mixture entering the chamber from the main combustion chamber and the flow lines of the gaseous fuel from the inlet to the ignition chamber.

### Examples of embodiment

Figure 1 is an axial sectional view of an upper part of a piston 1 in whose head there is a recess 2 which is part of a main combustion space 3. In a cylinder head 4 there is an ignition chamber 5, whose longitudinal axis 6 lies in an exemplary embodiment in the axis of the cylinder. A gaseous fuel supply 8 and the lower end of a spark plug 9 with a spark gap 10 open into the inner space 7 of the ignition chamber 5. In the lower rounded face of the ignition chamber 5 two communicating orifices 11 and 12 are shown, interconnecting the inner space of the ignition chamber 5 and the main combustion space 3. The exhaust and suction passage 13, 14 terminate with their valve seats 15, 16 in the bearing surface of the cylinder head 4, against which plates 17, 18 of the exhaust and suction valves abut. In the bearing plane 21, the cylinder head abuts against the engine block (not shown).

Fig. 2 schematically represents a first exemplary embodiment of the asymmetric ignition chamber 51 according to the invention. A spark gap 10 of an unillustrated spark plug opens into the asymmetric ignition chamber 51 in its upper part on the right-hand side. In the upper part on the left-hand side, the gaseous fuel supply duct 81 opens into the ignition chamber 51 from upwards, the axis X₀ of the gaseous fuel supply duct 81 being inclined at an angle α with respect to the longitudinal axis of the ignition chamber 51. In the lower part of the ignition chamber 51 on the left-hand side there is a communicating orifice 121 interconnecting the inner space of the ignition chamber 51 and the main combustion space 3. The axis X₁ of the communicating orifice 121 forms an angle β₁ with the longitudinal axis 6 of the ignition chamber 51. In the upper part of the ignition chamber 51 on the right-hand side there is a communicating orifice 111 interconnecting the inner space of the ignition chamber 51 and the main combustion space 3. The X₂ of the communicating orifice 111 forms an angle β₂ with the longitudinal axis 6 of the ignition chamber 51.

In an exemplary embodiment shown, the axes X₁, X₂ of the communicating orifices 121, 111, or the axis X₀ of the gaseous fuel supply duct 81 lie in the axial plane of the ignition chamber 51. In the embodiments not shown, this is not the case. In fact, it is advantageous if there are more communicating orifices 111, 121, whereby, as a rule, there is only one gaseous fuel supply duct 81. It is the mutual inclination of the pairs of communicating orifices 111, 121 with respect to the longitudinal axis of the ignition chamber 51 that is important. In an embodiment according to the invention, the angle β₂ of the axes X₂ of the communicating orifices 111 with respect to the longitudinal axis 6 of the ignition chamber 51 is at least by 3 ° greater than the angle β₁ between the axes X₁ of the communicating orifices 121. At the same time, the angle α the gaseous fuel supply duct 81 relative to the longitudinal axis of the ignition chamber 51 is greater than 5 °.

Fig. 3 shows the second embodiment of the ignition chamber 52 according to the invention. It only differs from the first embodiment of Fig. 2 by the arrangement of the gaseous fuel supply duct 82. In this exemplary embodiment, the gaseous fuel supply duct 82 opens into the space, through which the spark plug 9 enters the ignition chamber 52. The gaseous fuel flow thus passes near the insulator of the spark plug 9 and enters the inner space 7 of the ignition chamber 52 through the space of the spark gap 10.

The third and fourth exemplary embodiments of the ignition chamber 5 according to the invention are shown in Figs. 4 and 5. They differ from the embodiment of Figs. 2 and 3 by the configuration of the communicating orifices 11, 12. The configuration of the ignition chambers. 53 and 54 in Figs. 4 and 5 differ from each other only by the arrangement of the gaseous fuel supply duct 81, 82 as in the case of the first and second embodiments of Figs. 2 and 3.

The embodiments of Figs. 4 and 5 represent a special arrangement of the asymmetric ignition chamber 51, 52. The ignition chamber 53 has a communicating orifice 111, whose axis X₂ forms an angle β₂ with the longitudinal axis 6 of the ignition chamber 53, similarly as in the embodiment of Figure 2. The direction of the communicating orifice 122 is different because its axis is parallel to the longitudinal axis 6 of the ignition chamber 53, i.e., the angle analogous to the angle β₁ of Figure 2 is 0°. This mathematically corresponds to the embodiment shown in Figure 2, since the angle β₂ of the communicating orifices 111 relative to the longitudinal axis 6 of the ignition chamber is at least by 3° greater than the angle β₁ of the communicating orifices 122.

The direction of the communicating orifices 11, 111 with respect to the communicating orifices 12, 121, 122 then in all the exemplary embodiments according to the invention causes the flows of the lean fuel mixture expelled at the compression stroke of the piston 1 through the associated communicating orifices 12 - 11 (Fig. 1), 121 - 111 (Fig. 2 and 3), 122 - 111 (Fig. 4 and 5) into the ignition chamber 5, 51, 52, 53, 54 with the concentrated gaseous fuel to cross one another, thereby generating a swirling flow rotating substantially around the axis Y, which is perpendicular to the axis 6 of the ignition chamber 5, 51, 52, 53.

The transverse swirling flow, which is generated by the flows of the lean fuel mixture in the ignition chamber 5, 51, 52, 53, can form a substantially homogeneous easily ignitable mixture whose exothermic oxidation initiated by a spark of the spark plug generates ignition energy substantially greater than the energy of the spark itself. This makes it possible to operate the engine on an extremely lean mixture while complying with emission standards and other environmental norms and standards.

The solution with the gaseous fuel supply duct to the ignition chamber 52, 54 in the area of the electrodes of the spark plug 9 enables to flush efficiently residual gases around the spark gap 10 of the spark plug 9.

It is possible to contribute to the optimization of the formation of the transverse swirling flow of the lean mixture by the mutual arrangement of the communicating orifices 11, 12, 111, 121, 122, or, if appropriate, by the arrangement of the gaseous fuel supply duct 8, 81. From this point of view, it may be advantageous if the communicating orifice 11, 111 whose axis X₂ forms an angle β with the longitudinal axis of the ignition chamber 5, 51, 52, 53, 54, is associated with the communicating orifice 12, 121, 122, whose axis X₁ forms, a smaller angle β₁ with the longitudinal axis of the ignition chamber 5, 51, 52, 53, 54, whereby the axes X₁, X₂ of this pair of communicating orifices lie in a common plane. By improved swirling flow in the ignition chamber, a homogeneous easily ignitable mixture is formed, which increases the energy required to reliably ignite the lean mixture in the main combustion space.

From the point of view of formation of an easily ignitable mixture, also the inclination of the axes of the communicating orifices 11, 111, 12, 121, 122 according to their position relative to the exhaust and suction valves 19, 20 is important. The communicating orifice 11, 111, situated between the longitudinal axis 6 and the suction valve 20, is associated with the communicating orifice 12, 121, 122, situated between the longitudinal axis 6 and the exhaust valve the exhaust valve 19, in such a manner that the two communicating orifices constitute a pair 11-12, 111-121, 111-122. The axes X₁ of the communicating orifices 12, 121, 122, situated between the longitudinal axis 6 of the ignition chamber 5, 51, 52, 53, 54 and the exhaust valve 19 form an angle γ with the bearing plane 21 of the cylinder head 4. The angle γ is greater than the angle δ, formed between the axes of the communicating orifices 11, 111, situated between the longitudinal axis 6 of the ignition chamber 5, 51, 52, 53, 54 and the suction valve 20, with the bearing plane 21 of the cylinder head 4. The angle between the common planes is preferably in the range of 0° to 120°.

### List of references

- 1: piston (of internal combustion engine)
- 2: recess in bottom of piston
- 3: main combustion space
- 4: cylinder head (of internal combustion engine)
- 5: ignition chamber (in cylinder head)
- 51: asymmetric ignition chamber
- 52: asymmetric ignition chamber
- 53: asymmetric ignition chamber
- 54: asymmetric ignition chamber
- 6: longitudinal axis of cylinder (of internal combustion engine)
- 7: inner space (of ignition chamber)
- 8: gaseous fuel supply (to ignition chamber)
- 81: gaseous fuel supply duct (to ignition chamber) - 1st embodiment
- 82: gaseous fuel supply duct (to ignition chamber) - 2nd embodiment
- 9: spark plug
- 10: spark gap (of spark plug)
- 11: communicating orifice (between ignition chamber and main combustion space)
- 111: communicating orifice (between ignition chamber and main combustion space) - 1st to 4th embodiments
- 12: communicating orifice (between ignition chamber and main combustion space)
- 121: communicating orifice (between ignition chamber and main combustion space) - 1st and 2nd embodiments
- 122: communicating orifice (between ignition chamber and main combustion space) 3rd and 4th embodiments
- 13: exhaust channel
- 14: suction channel
- 15: seat of exhaust valve
- 16: seat of suction valve
- 17: plate of exhaust valve
- 18: plate of suction valve
- 19: exhaust valve
- 20: suction valve
- 21: bearing plane of cylinder head
- Y: axis of rotation of transverse swirling flow of lean mixture entering ignition chamber through communicating orifice
- α: angle between direction of gaseous fuel supply and axis of cylinder
- β₁: angle between direction of inlet of communicating orifice (121) and axis of cylinder
- β₂: angle between direction pf inlet of communicating orifice (11, 111) and axis of cylinder
- γ: angle between axis of communicating orifice (122) situated between longitudinal axis of ignition chamber (5, 51,52, 53, 54) and exhaust valve (19) and horizontal plane (21) of head (4)
- δ: angle between axis of communicating orifice (11, 111) lying between longitudinal axis of ignition chamber (5, 51,52, 53, 54) and suction valve (20) and bearing plane (21) of head (4).

## Claims

1. An ignition chamber (5, 51, 52, 53, 54) in a gas spark-ignition internal combustion piston engine projecting at least with its face into a main combustion space (3), in which a spark gap (10) of a spark plug (9) is arranged, whereby gaseous fuel supply duct (8, 81, 82) opens into an ignition chamber (5, 51, 52, 53, 54) in the vicinity of its face opposite the face which projects into the main combustion space (3) and the inner space (7) of the ignition chamber (5, 51, 52, 53, 54) and the main combustion space (3) of the engine cylinder are interconnected by at least two communicating orifices (11, 111, 12, 121, 122), **characterized in that** the axis (X₂) of one part of the communicating orifices (11, 111) forms an angle (β₂) with the longitudinal axis (6) of the ignition chamber (5, 51, 52, 53, 54), the angle (β₂) being at least by 3° greater than the angle (β₁), which the axis (X₁) of the second part of the communicating orifices (12, 121, 122) forms with the longitudinal axis (6) of the ignition chamber (5, 51, 52, 53, 54).

2. The ignition chamber (5, 51, 53) according to claim 1, **characterized in that** the axis (X₀) of the gaseous fuel supply duct (8, 81) forms an angle α with the longitudinal axis of the ignition chamber (5, 51, 53), the angle α being greater than 5°.

3. The ignition chamber (52, 54) according to claim 1, **characterized in that** the gaseous fuel supply duct (82) opens into the ignition chamber (52, 54) in the area of the spark gap (10) of the spark plug (9).

4. The ignition chamber (5, 51, 52, 53, 54) according to any of the preceding claims, **characterized in that** the communicating orifice (11, 111) is associated with the communicating orifice (12, 121, 122), whereby the axes of the mutually associated communicating orifices lie in a common plane, whereby the communicating orifice (11, 111) forms an angle β₁ with the plane perpendicular to this common plane, and the communicating orifice (12, 121, 122) forms an angle β₂ with this perpendicular plane, the angle β₂ being greater at least by 3° than the angle β₁, whereby the number of the pairs of communicating orifices and their respective common planes is greater than or equal to one, the angle between the common planes being in the range of 0 ° to 120 °.

5. The ignition chamber according to any of the preceding claims, **characterized in that** the axes (X₁) of the communicating orifices (12, 121, 122), situated between the longitudinal axis (6) of the ignition chamber (5, 51, 52, 53, 54) and the exhaust valve (19), form, with the bearing plane (21) of the head (4) of the cylinders, an angle (γ) which is greater than the angle (δ), which the axes of the communicating orifices (11, 111), situated between the longitudinal axis (6) of the ignition chamber (5, 51, 52, 53, 54) and the suction valve (20), form with the bearing plane (21) of the head (4) of the cylinders.
